# DEMANDE DE BREVET EUROPEEN

(11) **EP 4 161 081 A1**
(43) Date de publication de la demande: **05.04.2023**
(21) Numéro de dépôt: 22196725.0
(22) Date de dépôt: 20.09.2022
(51) Int. Cl.: H04N 21/258, H04N 21/2668, H04N 21/45

(54) **PROCÉDÉ DE GÉNÉRATION D'UNE CHAÎNE DE TÉLÉVISION PERSONNALISÉE POUR UN UTILISATEUR D'UN TERMINAL CONFIGURÉ POUR ACCÉDER À AU MOINS UN SERVICE DE DIFFUSION DE CONTENUS AUDIOVISUELS, DISPOSITIF, ÉQUIPEMENT DE SERVICE, SYSTÈME ET PROGRAMME D'ORDINATEUR CORRESPONDANTS.**

(30) Priorité: 30.09.2021 FR 2110372
(71) Demandeur: Orange, 92130 Issy-les-Moulineaux (FR)
(72) Inventeur: BRUNEL, Laurent Jean, 92326 CHATILLON (FR); CARBONNEL, Louis Xavier, 92326 CHATILLON (FR)
(74) Mandataire: Vidon Brevets & Stratégie

(57) **Abrégé**

L'invention concerne un procédé de génération d'une chaîne de télévision personnalisée pour un utilisateur d'un terminal configuré pour accéder à au moins un service de diffusion de contenus audiovisuels, ledit procédé comprenant :
- l'obtention préalable (20) de critères de préférences de l'utilisateur ;
- pour au moins un créneau temporel donné, la sélection (23), à partir des critères de préférence obtenus, d'un contenu audiovisuel à programmer sur la chaîne de télévision personnalisée, parmi une pluralité de contenus audiovisuels accessibles depuis le terminal de l'utilisateur par ledit au moins un service;
- sur réception (25) d'une demande d'accès à la chaîne de télévision personnalisée en provenance du terminal de l'utilisateur dans le créneau temporel donné, transmission (26) au terminal de l'utilisateur d'informations d'accès au contenu audiovisuel sélectionné, en vue de sa restitution par le terminal de l'utilisateur comme un programme de la chaîne personnalisée.

## Description

### Domaine technique de l'invention

La présente invention se rapporte de manière générale aux télécommunications, et plus précisément à l'accès à des contenus audiovisuels. Elle s'applique plus particulièrement à des terminaux utilisateurs et/ou à des équipements de service, manipulant de tels contenus.

### Art antérieur

Il existe aujourd'hui une offre riche et variée de services de diffusion de contenus audiovisuels pour un utilisateur.

Des chaînes de télévision publiques ou privées accessibles par la télévision numérique terrestre TNT, la télévision par câble ou par satellite, proposent de façon traditionnelle des grilles de programmes audiovisuels, qu'elles diffusent dans un créneau horaire prévu par la grille. En complément, beaucoup d'entre elles mettent aujourd'hui à disposition de l'utilisateur un service de rediffusion de programmes audiovisuels en rattrapage (ou « catch up », en anglais) pendant une période donnée, par exemple un mois après la date de diffusion de ce programme prévue par la grille de programmes. De la sorte, l'utilisateur peut encore accéder en mode téléchargement en continu ((ou « streaming », en anglais) à un contenu audiovisuel dont il a raté la diffusion, au moment où il le souhaite pendant cette période donnée.

Certaines de ces chaînes sont dites généralistes, parce qu'elles proposent des programmations variées, destinées à tous types de publics et adaptées en fonction du créneau horaire et du type d'audience le plus représenté sur ce créneau horaire. D'autres sont dites thématiques, car spécialisées dans un thème particulier, comme le sport, les voyages, la culture, l'actualité, le jeune public, etc.

Face à ce vaste choix de chaînes de télévision, certains opérateurs de service proposent aussi à l'utilisateur d'en définir une comme chaîne favorite, par exemple en lui dédiant une touche d'une télécommande du téléviseur ou une icône particulière sur un écran de mosaïque des différentes chaînes. Une telle configuration facilite l'accès à cette chaîne en évitant à l'utilisateur d'avoir à faire défiler une liste de chaînes disponibles ou de mémoriser un numéro de chaînes à plusieurs chiffres. Depuis quelques années, on connaît aussi des plateformes de diffusion de contenus audiovisuels qui proposent à leurs utilisateurs abonnés un large catalogue de contenus audiovisuels, de type séries, films ou documentaires, disponibles à la demande.

On comprend qu'aujourd'hui, l'utilisateur dispose d'une offre de contenus audiovisuels quasiment pléthorique. Cette grande diversité est intéressante, mais pose des problèmes de recherche et de navigation pour sélectionner, en fonction de ses goûts et de ses envies du moment, le meilleur contenu audiovisuel disponible à un instant donné.

En outre, une chaîne de télévision proposée par un opérateur de services, qu'elle soit thématique ou généraliste, ne correspond jamais exactement aux attentes d'un utilisateur particulier.

L'invention vient améliorer la situation.

### Présentation de l'invention

L'invention répond à ce besoin en proposant un procédé de génération d'une chaîne de télévision personnalisée pour un utilisateur d'un terminal configuré pour accéder à au moins un service de diffusion de contenus audiovisuels, ledit procédé comprenant :
- l'obtention préalable de critères de préférences de l'utilisateur ;
- pour au moins un créneau temporel donné, la sélection, à partir des critères de préférence obtenus, d'un contenu audiovisuel à programmer sur la chaîne de télévision personnalisée, parmi une pluralité de contenus audiovisuels accessibles depuis le terminal de l'utilisateur par ledit au moins un service, ladite sélection étant mise en œuvre par un module de décision configuré pour détecter dans une image, un texte ou une donnée sonore dudit contenu audiovisuel, à partir d'un modèle d'analyse préalablement construit par apprentissage machine, des caractéristiques ou événements représentatifs des critères de préférences de l'utilisateur;
- la programmation du contenu sélectionné dans la chaîne de télévision personnalisée, sur ledit créneau temporel; et
- la transmission au terminal de l'utilisateur d'informations d'accès au contenu audiovisuel sélectionné, en vue de sa restitution par le terminal de l'utilisateur comme un programme de la chaîne personnalisée.

L'invention propose une approche tout-à-fait nouvelle et inventive de la gestion de l'accès à des contenus audiovisuels disponibles pour un utilisateur d'un ou plusieurs services de diffusion de contenus audiovisuels. Elle propose en effet de construire une chaîne de télévision personnalisée pour l'utilisateur en fonction de critères de préférences de cet utilisateur.

Par « contenu multimédia », on entend un contenu numérique qui contient au moins une image, un texte ou une donnée sonore. Le contenu multimédia peut être reçu en diffusion (streaming, chaîne de télévision, de radio, etc) ou stocké sur un support (disque dur, base de données, serveur, etc). Par « critères de préférences », on entend une caractéristique ou un ensemble de caractéristiques liées à un contenu audiovisuel et qui définissent une préférence ou un goût de l'utilisateur pour ce contenu audiovisuel. Il s'agit par exemple d'un thème, tel que le sport, les voyages, le cinéma, etc, d'un genre de film, comme une comédie, un thriller, etc, d'un niveau de violence ou d'action selon l'heure du jour ou le jour de la semaine, d'un acteur présent dans le film, etc.

Avec l'invention, l'utilisateur peut définir un thème qui lui est propre, comme par exemple « automobile Europe » ou « sport sans football » ou bien élargir la définition d'un thème proposé par une chaîne thématique, comme « exploration des fonds marins et voyage ».

Plus précisément, l'invention consiste à sélectionner pour un créneau horaire donné et parmi les contenus audiovisuels accessibles à cet horaire le contenu audiovisuel le plus susceptible de plaire à l'utilisateur et de le programmer dans une grille de programmes de la chaîne personnalisée.

Selon l'invention, le procédé comprend l'apprentissage d'un modèle d'analyse des contenus audiovisuels disponible pour l'utilisateur à partir des critères de préférences et la sélection du contenu audiovisuel met en œuvre un module de décision automatique basé sur ledit modèle d'analyse.

Avantageusement, l'invention s'appuie sur une technique d'apprentissage machine (ou « machine learning », en anglais) pour construire un modèle de données configuré pour détecter dans une image, un texte, une donnée sonore des contenus audiovisuels, des caractéristiques ou événements représentatifs des critères de préférences de l'utilisateur et permettant de sélectionner le meilleur contenu audiovisuel disponible pour l'utilisateur en fonction de ses préférences annoncées et/ou de ses usages passés en s'appuyant sur un modèle de données élaboré et performant.

Lorsque l'utilisateur demande à visualiser sa chaîne personnalisée, par exemple en pressant une touche dédiée de sa télécommande ou en cliquant sur une icône de cette chaîne, le terminal utilisateur reçoit des informations d'accès au contenu audiovisuel sélectionné en vue de sa restitution sur un écran du terminal de l'utilisateur, comme un programme de la chaîne de télévision personnalisée.

De la sorte, l'utilisateur n'a pas à naviguer dans l'intégralité de l'offre audiovisuelle disponible, en particulier il n'a pas à zapper sur l'ensemble des chaînes de télévision, pour choisir le contenu audiovisuel qui lui plaît le plus. Au contraire, la chaîne personnalisée lui propose un contenu audiovisuel choisi spécialement pour lui, auquel il accède sans effort.

Avantageusement, le procédé comprend en outre l'obtention d'un historique d'usage de contenus audiovisuels par l'utilisateur du service et la sélection prend en compte ledit historique.

Par « historique d'usages de contenus audiovisuels », on entend tous les contenus audiovisuels que l'utilisateur a visualisés ou écoutés depuis un de ses équipements terminaux, partiellement ou complètement. Un historique d'usage comprend des informations relatives à chaque usage ou de consommation de contenus, notamment des informations relatives au service de diffusion de contenus utilisé, par exemple à la chaîne ou la plateforme de service, à l'identification du contenu, l'horaire de visualisation, le nombre de fois qu'il a été vu ou écouté, etc.

L'invention s'applique à tout type de service d'accès à des contenus audiovisuels. Par exemple, l'utilisateur a souscrit à un service de diffusion de chaînes de télévision numérique et/ou à un service de rediffusion de programmes desdites chaînes de télévision numérique en mode rattrapage et/ou à un service de vidéo à la demande.

Selon un autre aspect de l'invention, l'information d'accès au contenu audiovisuel sélectionné sur le créneau temporel donné comprend au moins un identifiant du contenu audiovisuel sélectionné et un identifiant du service sur lequel ledit contenu audiovisuel est accessible.

L'information d'accès en question est destinée à permettre au terminal de l'utilisateur d'accéder au contenu audiovisuel sélectionné. Par exemple, l'identifiant d'accès au contenu sélectionné est un identifiant de la chaîne de télévision qui l'a programmé sur le créneau temporel donné ou une information d'accès au contenu dans un catalogue de vidéo à la demande ou encore une information d'accès au contenu dans une liste de contenus audiovisuels accessible en rattrapage.

Selon encore un autre aspect de l'invention, ladite sélection est mise en œuvre pour une pluralité de créneaux temporels au cours d'une phase préalable à une réception d'une demande d'accès, le procédé comprend l'enregistrement des informations de programmation des contenus sélectionnés sur la pluralité de créneaux temporels dans une grille de programmes audiovisuels dédiée à la chaîne personnalisée et la transmission de la grille de programmes au terminal de l'utilisateur.

Selon au moins un mode de réalisation de l'invention, la construction de la chaîne personnalisée est générée dans une phase préalable et sa grille de programmes est mise à disposition de l'utilisateur. Un avantage est que l'utilisateur peut prendre connaissance en avance de la programmation proposée par sa chaîne personnalisée. Un autre avantage est que lorsqu'il demande à accéder au contenu audiovisuel programmé sur sa chaîne personnalisée, il lui est restitué sans latence.

Selon encore un autre aspect de l'invention, la sélection du contenu audiovisuel est mise en œuvre sur réception d'une demande d'accès à la chaîne personnalisée sur un créneau temporel courant. Selon ce mode de réalisation de l'invention, la construction de la chaîne personnalisé est faite à la demande, c'est-à-dire quand l'utilisateur demande effectivement l'accès à cette chaîne.

Il s'agit donc d'une construction partielle, sur le ou les créneaux temporels pendant lesquels l'utilisateur demande à regarder sa chaîne de télévision personnalisée. Un avantage est de ne pas mettre en œuvre de calculs inutilement et donc d'économiser les ressources de calcul.

Selon un autre aspect de l'invention, la pluralité de contenus audiovisuels disponibles pour l'utilisateur appartient à un groupe comprenant au moins :
- des contenus audiovisuels dont la diffusion est programmée dans au moins une grille de télévision accessible à l'utilisateur ;
- des contenus audiovisuels déjà diffusés par une chaîne de télévision accessible à l'utilisateur mais encore disponibles en rediffusion ;
- des contenus audiovisuels accessibles à l'utilisateur à la demande.

Un avantage est d'exploiter toute la diversité de l'offre audiovisuelle disponible pour l'utilisateur via les différents services de diffusion auxquels il a accès.

Selon encore un autre aspect de l'invention, le procédé comprend pour au moins un contenu audiovisuel transmis sur la chaîne de télévision personnalisée de l'utilisateur, l'obtention d'une information de conformité du contenu audiovisuel aux critères de préférence de l'utilisateur et une mise à jour du modèle d'analyse à partir de ladite au moins une information d'évaluation obtenue pour le contenu audiovisuel transmis.

L'utilisateur évalue le contenu audiovisuel proposé et cette évaluation indiquant l'adéquation du contenu audiovisuel programmé sur la chaîne personnalisée est exploitée pour faire évoluer le modèle de données utilisé par le système de décision automatique. L'apprentissage du module de décision se fait donc au fil de l'eau à partir d'un historique annoté des usages de la chaîne personnalisée par l'utilisateur. De la sorte, le processus de sélection évolue au cours du temps pour s'adapter plus finement aux goûts et aux attentes de l'utilisateur.

Avec l'invention, l'utilisateur bénéficie d'une programmation choisie spécialement pour lui sur sa chaîne de télévision personnalisée. Les contenus audiovisuels programmés ont été sélectionnés parmi la pluralité de contenus audiovisuels accessibles à l'utilisateur sur les différences services auxquels il a souscrit. Il lui suffit de zapper sur sa chaîne personnalisée pour accéder, depuis son terminal, au contenu sélectionné pour lui par l'invention sur un des services de diffusion disponibles pour lui, comme s'il s'agissait d'un contenu programmé par sa chaîne personnalisée.

Selon cet aspect de l'invention, grâce à l'obtention d'une information de conformité du contenu aux critères de préférences de l'utilisateur et la transmission de ladite information audit équipement de service, un retour de l'utilisateur est pris en compte pour faire évoluer le processus de génération de la chaîne de télévision personnalisée et affiner la programmation des contenus audiovisuels sur cette chaîne.

L'invention concerne également un dispositif de génération d'une chaîne de télévision personnalisée pour un utilisateur d'un terminal configuré pour accéder à au moins un service de diffusion de contenus audiovisuels, ledit dispositif étant configuré pour mettre en œuvre :
- l'obtention préalable de critères de préférences de l'utilisateur ;
- pour au moins un créneau temporel donné, la sélection, à partir des critères de préférence obtenus, d'un contenu audiovisuel à programmer sur la chaîne de télévision personnalisée, parmi une pluralité de contenus audiovisuels accessibles pour cet utilisateur par ledit au moins service sur le créneau temporel donné, ladite sélection étant mise en œuvre par un module de décision configuré pour détecter_{[MBE1]} dans une image, un texte ou une donnée sonore dudit contenu audiovisuel, à partir d'un modèle d'analyse préalablement construit par apprentissage machine, _{[MBE2]} des caractéristiques ou événements représentatifs des critères de préférences de l'utilisateur;

- la programmation du contenu sélectionné dans la chaîne de télévision personnalisée, sur ledit créneau temporel;_{[MBE3] [MBE4]}et;
- la transmission au terminal de l'utilisateur d'informations d'accès au contenu audiovisuel sélectionné en vue de sa restitution sur le terminal de l'utilisateur comme un programme de la chaîne personnalisée.

Avantageusement, ledit dispositif configuré pour mettre en œuvre les étapes du procédé de génération d'une chaîne de télévision personnalisée tel que décrit précédemment, dans ses différents modes de réalisation.

Avantageusement, ledit dispositif est intégré dans un équipement de service impliqué dans la mise en œuvre d'au moins un service de diffusion de contenus audiovisuels à un utilisateur. Avantageusement, ledit équipement de service est compris dans un système de diffusion d'une chaîne de télévision personnalisée à un terminal d'un utilisateur dans un réseau de télécommunications, ledit terminal étant configuré pour accéder à au moins un service de diffusion de contenus audiovisuels.

Le système, l'équipement de service et le dispositif de génération d'une chaîne de télévision personnalisée présentent au moins les mêmes avantages que ceux conférés par le procédé de génération précité.

L'invention concerne également un produit programme d'ordinateur comprenant des instructions de code de programme pour la mise en œuvre du procédé telsque décrit précédemment, lorsqu'il est exécuté par un processeur.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur comprenant des instructions de code de programme pour l'exécution des étapes des procédés selon l'invention tel que décrits ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé précité.

Selon un exemple de réalisation, la présente technique est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.). Par la suite, on entend par ressources tous ensembles d'éléments matériels et/ou logiciels support d'une fonction ou d'un service, qu'ils soient unitaires ou combinés.

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (« firmware » en anglais), etc.

Chaque composante du système précédemment décrit met bien entendu en œuvre ses propres modules logiciels.

Les différents modes de réalisation mentionnés ci-dessus sont combinables entre eux pour la mise en œuvre de la présente technique.

### Brève description des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig 1****]** : illustre de façon schématique un exemple de contexte de mise en œuvre de l'invention ;
**[****Fig 2****]** : illustre de façon schématique un exemple d'architecture d'un dispositif de génération d'une chaîne de télévision personnalisée et d'un dispositif de traitement d'une demande d'accès à cette chaîne personnalisée selon un mode de réalisation de l'invention;
**[****Fig 3****]** : décrit sous forme d'un logigramme les étapes d'un procédé de génération d'une chaîne de télévision personnalisée et d'un procédé de traitement d'une demande d'accès à cette chaîne personnalisée, selon un premier exemple de réalisation de l'invention ;
**[****Fig 4****]** : détaille la sélection d'un contenu audiovisuel à programmer sur la chaîne de télévision personnalisée, parmi la pluralité de contenus audiovisuels accessible à l'utilisateur selon un exemple de réalisation de l'invention ;
**[****Fig 5****]** : décrit sous forme d'un logigramme les étapes d'un procédé de génération d'une chaîne de télévision personnalisée et d'un procédé de traitement d'une demande d'accès à cette chaîne personnalisée, selon un deuxième exemple de réalisation de l'invention ;
**[****Fig 6****]** : décrit un exemple de structure matérielle d'un dispositif de génération d'une chaîne de télévision personnalisée selon l'invention ; et
**[****Fig 7****]** : décrit un exemple de structure matérielle d'un dispositif de traitement d'une demande d'accès à cette chaîne personnalisée selon l'invention.

### Description détaillée de l'invention

Le principe de l'invention repose sur la génération d'une chaîne de télévision personnalisée pour un utilisateur d'un ou plusieurs services de diffusion de contenus audiovisuels, à partir de critères de préférences collectés pour cet utilisateur, et sur la mise à disposition de cette chaîne personnalisée à l'utilisateur.

Plus précisément, cette génération met en œuvre, pour au moins un créneau temporel donné, la sélection, au moins à partir des critères de préférence et optionnellement d'un historique d'usage du ou des services de diffusion par cet utilisateur, d'un contenu audiovisuel parmi une pluralité de contenus audiovisuels disponibles pour cet utilisateur sur le créneau temporel donné.

Sur réception d'une demande d'accès à la chaîne de télévision personnalisée en provenance de l'utilisateur dans le créneau temporel donné, une information d'accès au contenu audiovisuel programmé sur la chaîne personnalisée est transmise au terminal de l'utilisateur, afin qu'il puisse récupérer les flux de données du contenu audiovisuel, les décoder et les restituer à l'utilisateur sur un dispositif d'affichage, comme s'il s'agissait d'un programme de cette chaîne personnalisée.

L'invention propose donc de mettre à disposition de l'utilisateur une chaîne de télévision virtuelle, générée à partir de l'ensemble des contenus audiovisuels accessibles à l'utilisateur, et dont la grille de programmes a spécifiquement été construite pour cet utilisateur selon ses goûts.

L'invention s'applique à tout type de service de fourniture ou de diffusion de contenus audiovisuels mis en œuvre dans tout type de réseau de télécommunications, à un utilisateur d'un équipement terminal connecté à ce réseau et configuré pour accéder à ce service.

Par « contenu multimédia », on entend un contenu numérique qui contient au moins une image, un texte ou une donnée sonore. Le contenu multimédia peut être reçu en diffusion, (streaming, chaîne de télévision, de radio, etc) ou stocké sur un support (disque dur, base de données, serveur, etc).

L'invention s'applique tout particulièrement au(x) service(s) de diffusion de contenus audiovisuels mis en œuvre par un même opérateur de service. En effet, les problématiques de droits d'accès de l'utilisateur à tel ou tel contenu audiovisuel sont gérés de manière centralisée par l'opérateur. Néanmoins, elle s'applique aussi lorsque l'utilisateur a souscrit à plusieurs services de diffusion de contenus audiovisuels auprès de différents opérateurs et à un service d'accès à internet qui lui propose une interface de gestion, pour chaque service de diffusion, de ses droits d'accès à ce service. De la sorte, l'invention peut générer une chaîne de télévision personnalisée pour l'utilisateur à partir de contenus audiovisuels issus de ces différents services de diffusion.

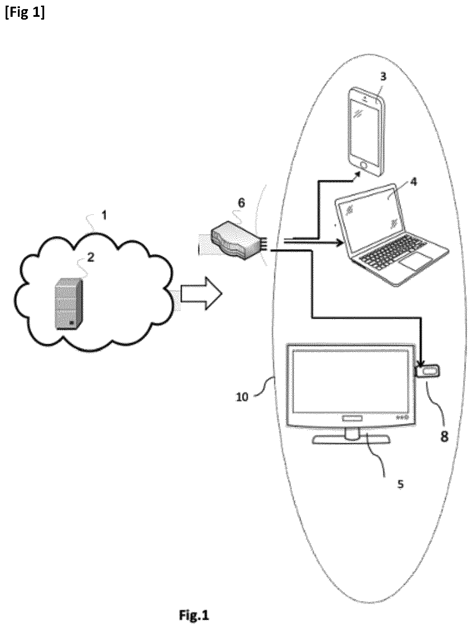

La figure 1 représente le contexte général d'un mode de réalisation de l'invention, dans lequel un système de télécommunication comporte un premier réseau local ou LAN (Local Area Network, 10) et un réseau de type étendu, ou WAN (Wide Area Network, 1). Selon cet exemple non limitatif, le réseau LAN est un réseau domestique et le réseau WAN est un réseau Internet. Plus largement, le réseau LAN 10 pourrait être un réseau d'entreprise et le réseau WAN 1 pourrait être de n'importe quel type (cellulaire, GSM - Global System for Mobile Communications, UMTS - Universal Mobile Telecommunications System, Wifi - Wireless, DVB- Digital Video Broadcast, etc.) sans sortir du cadre de l'invention.

Le terminal 3, par exemple un téléphone intelligent de type « smartphone », le terminal 4, par exemple un ordinateur portable, et le terminal 5, par exemple une clef HDMI 8 connectée à un téléviseur TV, se trouvent dans cet exemple, situés dans le réseau local (LAN, 1) piloté par une passerelle domestique 6. Le contexte du réseau local est donné à titre d'exemple et pourrait être transposé aisément à un réseau Internet de type « best effort », un réseau d'entreprise, etc.

Un équipement de service 2, impliqué dans la mise en œuvre d'au moins un service S de diffusion de contenus audiovisuels numériques, par exemple un serveur de contenus numériques, se trouve selon cet exemple dans le réseau étendu (WAN, 1) mais il pourrait indifféremment être situé dans le réseau local (LAN, 10), par exemple dans la passerelle domestique 6 ou tout autre équipement capable d'héberger un tel serveur de contenus. Le serveur de contenus 2 reçoit par exemple des chaînes de contenus de télévision numérique en provenance d'un réseau de télévision diffusée, non représenté, et/ou des vidéos à la demande et/ou des contenus de télévision numérique disponibles à la rediffusion en mode rattrapage, et les met à disposition des terminaux clients.

On rappelle qu'un réseau local, aussi appelé dans la suite réseau domestique, est un réseau informatique qui relie ensemble, avec ou sans fils, les équipements terminaux, ou plus simplement terminaux, d'une maison (ordinateurs, périphériques d'impression, de stockage, objets connectés, etc.), aptes à communiquer ensemble. Un tel réseau domestique peut comporter un équipement routeur, aussi communément appelé passerelle, élément intermédiaire assurant la redirection, ou routage, des paquets de données entre les différents terminaux et réseaux qui lui sont connectés. Un utilisateur d'un tel réseau peut exécuter un service donné sur un terminal donné disposant de caractéristiques propres (par exemple, visualiser un contenu multimédia C).

Le contenu multimédia C peut être, sans perte de généralité, issu d'un réseau de type DVB, IP, etc. On rappelle qu'un réseau numérique diffusé de type DVB (acronyme de Digital Video Broadcast) dispose d'une infrastructure sous-jacente pouvant avoir pour support le satellite (SAT), la télévision numérique de terre, ou encore le câble, non représentés. Alternativement ou de manière complémentaire, les terminaux pourraient également être connectés à un réseau de type DVB-IP, aussi appelé IPTV, c'est-à-dire assurant la diffusion de télévision numérique ou la fourniture de contenus, par exemple en VOD (VidéO à la Demande) à partir du réseau Internet sous le contrôle d'un opérateur de service assurant la qualité de la délivrance (par exemple, la TV d'un opérateur, associée à un décodeur numérique et une passerelle domestique du même opérateur). Dans ces deux cas, les contenus numériques multiplexés sont reçus par un décodeur numérique, aussi appelé STB (ou « Set Top Box », en anglais), via des supports de réception appropriés (antennes, câbles, ADSL, etc.) et les différents contenus numériques sont dé-multiplexés et décodés avant restitution par les terminaux (e.g. téléviseurs) connectés à la STB. Un tel décodeur, non représenté sur la figure 1, peut être associé à la passerelle ou directement intégré dans le terminal. Le terminal peut aussi être prévu pour accéder à des contenus diffusés en mode continu sans téléchargement, ou « streamés » à partir du WAN ou du LAN. On parle, dans ce cas, de télévision « connectée », c'est-à-dire que le terminal peut être raccordé au réseau Internet afin de fournir un ensemble de services aux utilisateurs. Si la restitution ne s'effectue pas sous le contrôle d'un opérateur de service, on parle aussi dans ce cas de contenus de type OTT (ou « Over The Top », en anglais). La télévision OTT permet à un utilisateur d'un terminal connecté au réseau Internet de restituer des chaînes numériques ou des contenus Web sur le téléviseur. Généralement, ce type de terminal « connecté » s'interface avec la passerelle en charge du réseau local de l'utilisateur pour accéder à un serveur de contenus dans le réseau étendu. Enfin, un tel terminal peut accéder à des contenus numériques depuis l'intérieur de réseau local, par exemple depuis un dispositif de streaming associé à un disque dur local (non représenté). Dans la suite, on parle indifféremment de contenu multimédia pour des contenus reçus à partir d'un réseau de diffusion (DBV, IPTV), en OTT, et/ou via un téléchargement (streaming, téléchargement de fichier, etc.).

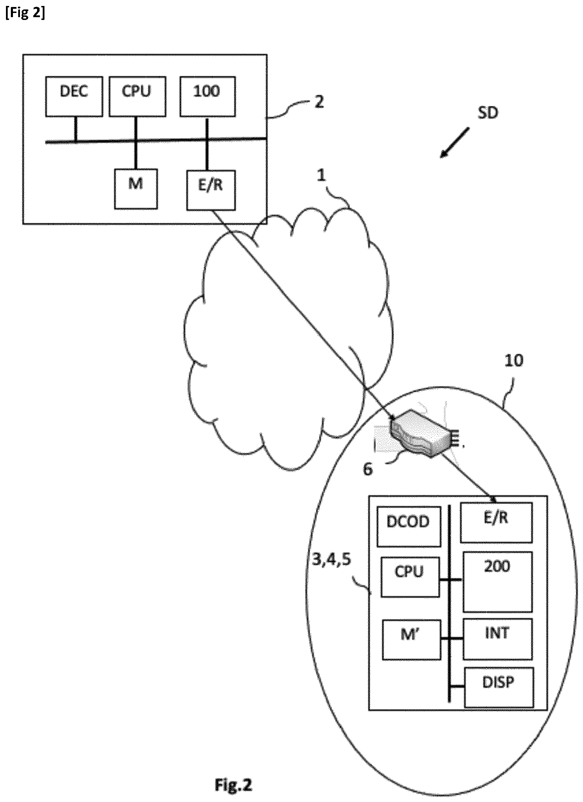

La figure 2 représente une architecture d'un équipement de service selon un mode de réalisation de l'invention, par exemple l'équipement serveur 2 de la figure 1.

Il comprend, classiquement, des mémoires M associées à un processeur CPU. Les mémoires peuvent être de type ROM (de l'anglais « *Read Only Memory* ») ou RAM (de l'anglais « *Random Access Memory »)* ou encore Flash. L'équipement de service 2 communique avec le réseau Internet étendu 1 et notamment d'autres équipements de service (non représentés) impliqués dans la mise en œuvre du ou des services de diffusion de contenus numériques considérés. Il communique aussi avec le terminal client 3, 4, 5 via la passerelle résidentielle 6 par l'intermédiaire d'un module d'émission-réception E/R.

Selon cet exemple de réalisation de l'invention, l'équipement serveur comprend un dispositif 100 de génération d'une chaîne de télévision numérique personnalisée pour l'utilisateur du terminal client 3, 4, 5. Un tel dispositif est configuré pour obtenir préalablement des critères de préférences de l'utilisateur. Optionnellement, il obtient aussi un historique des usages du ou des services de diffusion de contenus audiovisuels. Selon l'invention, le dispositif 100 est aussi configuré pour sélectionner, pour au moins un créneau temporel donné, à partir des critères de préférence obtenus et optionnellement de l'historique d'usages, un contenu audiovisuel parmi une pluralité de contenus audiovisuels disponibles pour cet utilisateur sur ledit créneau temporel et, sur réception d'une demande d'accès à la chaîne de télévision personnalisée en provenance de l'utilisateur dans le créneau temporel donné, pour transmettre au terminal de l'utilisateur des informations d'accès au contenu audiovisuel sélectionné, afin qu'il le restitue à l'utilisateur comme un programme de la chaîne personnalisée.

Les critères de préférence et l'historique d'usage collectés peuvent être enregistrées par exemple dans les mémoires M de l'équipement serveur 2 ou dans une mémoire externe hébergée par un autre équipement du réseau de télécommunications WAN 1.

Avantageusement, le dispositif 100 est configuré pour mettre en œuvre la construction par apprentissage d'un modèle d'analyse de la pluralité de contenus audiovisuels accessibles à l'utilisateur en fonction des critères de préférences de l'utilisateur et pour sélectionner le contenu audiovisuel en mettant en œuvre un système de décision automatique basé sur le modèle d'analyse.

Il est aussi configuré pour enregistrer une information d'accès au contenu audiovisuel sélectionné pour être programmé sur le créneau temporel donné par la chaîne de télévision personnalisée et pour la transmettre au terminal de l'utilisateur.

Avantageusement, il est également configuré pour obtenir une information de conformité de ce contenu audiovisuel aux critères de préférence de l'utilisateur et pour mettre à jour le modèle d'analyse à partir de ladite au moins une information d'évaluation obtenue pour le contenu audiovisuel transmis.

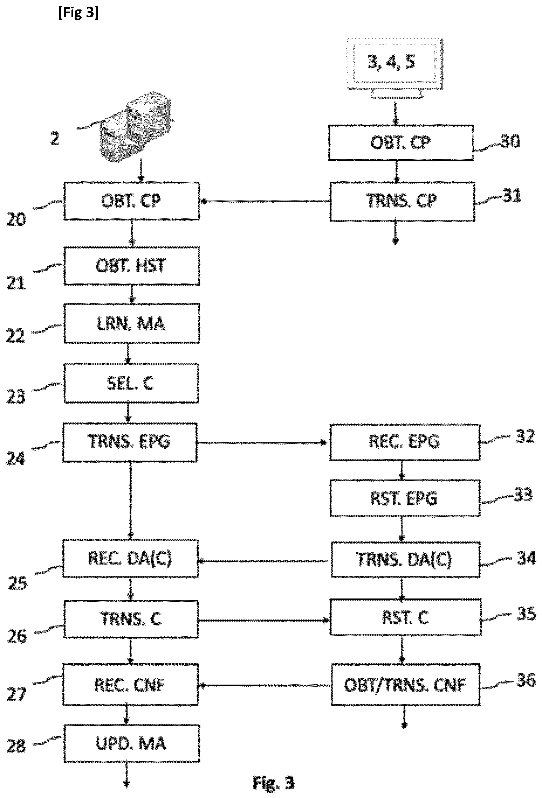

Le dispositif 100 met ainsi en œuvre le procédé de génération d'une chaîne de télévision personnalisée selon l'invention qui sera détaillé ci-après en relation avec les figures 3 à 5. Alternativement, le dispositif 100 peut être indépendant de l'équipement serveur 2, mais connecté à celui-ci par une liaison quelconque, filaire ou non. Par exemple, il est intégré à un autre équipement du réseau de télécommunications étendu 1, par exemple un autre équipement de service. Selon un autre mode de réalisation de l'invention, il peut être intégré à un équipement du réseau local WAN 10, par exemple à la passerelle 6.

La figure 2 représente aussi une architecture d'un équipement terminal 3, 4, 5 selon un mode de réalisation de l'invention. Il s'agit par exemple du téléviseur 5 de la figure 1.

Il comprend, classiquement, des mémoires M' associées à un processeur CPU. Les mémoires peuvent être de type ROM (de l'anglais « *Read Only Memory* ») ou RAM (de l'anglais « *Random Access Memory* ») ou encore Flash. L'équipement terminal communique avec la passerelle résidentielle 6 et accède au réseau Internet étendu 1 via cette passerelle 6, ce qui lui permet notamment de communiquer avec des équipements de service tels que le serveur 2, impliqués dans la mise en œuvre du service de diffusion de contenus audiovisuels considéré. L'équipement terminal 5 communique avec le réseau local LAN 10 avec d'autres équipements du réseau local et notamment la passerelle 6 par l'intermédiaire de laquelle il accède au réseau Internet étendu 1 et notamment à l'équipement service 2 impliqué dans la mise en œuvre du service de diffusion de contenus audiovisuels considéré. Avantageusement il comprend aussi un module DCOD de décodage de flux de données codées représentatives d'un contenu audiovisuel diffusé par le service considéré et un module INT d'interface avec l'utilisateur par l'intermédiaire duquel notamment ce dernier sélectionne une chaîne de télévision ou un contenu audiovisuel. Il s'agit par exemple d'une télécommande, d'un écran tactile etc. Il comprend enfin un dispositif DISP d'affichage de contenus audiovisuels, comme par exemple le téléviseur 5 ou un moniteur.

Selon cet exemple de réalisation de l'invention, l'équipement serveur comprend un dispositif 200 de traitement d'une demande d'accès de l'utilisateur à la chaîne de télévision personnalisée. Un tel dispositif est configuré pour collecter des critères de préférence de l'utilisateur, les transmettre à l'équipement serveur, transmettre à l'équipement serveur 2 la demande d'accès à la chaîne de télévision personnalisée en provenance de l'utilisateur, recevoir l'information d'accès au contenu audiovisuel programmé par la chaîne personnalisé sur le créneau temporel considéré et restituer à l'utilisateur le contenu audiovisuel comme un programme de la chaîne personnalisée, en réponse à ladite demande.

Les critères de préférence sont par exemple saisis par l'intermédiaire du module d'interface INT. Une fois collectés, ils peuvent être enregistrées par exemple dans les mémoires M'de l'équipement terminal 5 ou dans une mémoire externe hébergée par un autre équipement du réseau local LAN 10. Avantageusement, le dispositif 200 est aussi configuré pour obtenir de l'utilisateur, suite à la restitution du contenu audiovisuel, une information relative à une conformité du contenu aux critères de préférences de l'utilisateur et pour transmettre ladite information audit équipement de service.

Le dispositif 200 met ainsi en œuvre le procédé de traitement d'une demande d'accès à la chaîne personnalisé selon l'invention qui sera détaillé ci-après en relation avec les figures 3 à 5. Alternativement, le dispositif 200 peut être indépendant de l'équipement terminal 5, mais connecté à celui-ci par une liaison quelconque, filaire ou non. Par exemple, il peut être intégré à un autre équipement terminal du réseau de communication local, par exemple la passerelle domestique 6.

On présente désormais, en relation avec les figures 3 à 5, sous forme de logigrammes, des exemples de mise en œuvre d'un procédé de génération d'une chaîne de télévision personnalisée pour un utilisateur (étapes 20 à 28) et d'un procédé de traitement d'une demande d'accès à ladite chaîne personnalisée en provenance de l'utilisateur (étapes 30 à 36), selon un mode de réalisation de l'invention.

Dans ce qui suit, le procédé de génération est mis en œuvre par le dispositif 100 précité, intégré dans le serveur 2 et le procédé de traitement est mis en œuvre par le dispositif 200 précité, intégré dans le terminal 5. Bien sûr, l'invention ne se limite pas à cet exemple de réalisation, le dispositif 100 pouvant être intégré dans un équipement du réseau local LAN 10, comme par exemple la passerelle 6 et le dispositif 200 pouvant être hébergé par un autre équipement du réseau local LAN 10.

On suppose aussi que l'utilisateur du terminal 5 accède à au moins un service de diffusion de contenu audiovisuel d'un opérateur de service, par exemple un service de diffusion de chaînes de télévision S1. Optionnellement, il peut aussi bénéficier d'un accès à un service S2 de rediffusion de contenus numériques déjà diffusés en mode rattrapage et à un service S3 de location de vidéo à la demande, etc

On note que l'accès à chacun de ces services peut être soumis ou non à souscription préalable. Autrement dit, l'invention s'applique aussi bien aux chaînes de la TNT qu'à des services de diffusion de contenus payants, par exemple via des plateformes de vidéo à la demande.

On suppose aussi que l'équipement serveur 2 contribue à la mise en œuvre de ces différents services.

En relation avec la figure 3, on décrit un premier exemple de réalisation de l'invention selon lequel la chaîne de télévision personnalisée est générée en avance de phase, c'est-à-dire indépendamment de toute demande d'accès de l'utilisateur à la chaîne personnalisée. Par exemple, sa programmation est générée à réception de nouvelles grilles de programmes des chaînes de télévision du service S1 et de métadonnées décrivant les contenus audiovisuels programmées dans ces nouvelles grilles.

En 30, le terminal utilisateur 5 obtient des critères de préférences CP de la part de l'utilisateur en vue de la génération de sa chaîne de télévision personnalisée. Par exemple, il présente à l'utilisateur un formulaire, comprenant des questions, que l'utilisateur remplit à l'aide de l'interface INT de saisie, par exemple un écran tactile, un clavier, une télécommande, etc.

Le terminal utilisateur 5 transmet en 31 les critères de préférences CP obtenus à l'équipement serveur 2, qui les reçoit en 20. On note que ce dernier peut avoir sollicité ou non l'envoi de ces informations CP par le terminal 5.

Avantageusement ces critères de préférence CP comprennent une pluralité de caractéristiques de contenus audiovisuels appréciés ou préférés de l'utilisateur. Elles définissent donc un ou plusieurs thèmes ou sujets, tels que le sport, les voyages, le cinéma, etc, un type de contenu tel qu'un film, une série, un documentaire, un journal télévisé, d'un genre de film, comme une comédie, un thriller, etc, d'un niveau de violence ou d'action, d'un ou plusieurs acteurs ou présentateurs intervenant dans le contenu, d'un créneau horaire associé à un type de contenu particulier, etc.

Ils sont par exemple stockés dans une mémoire M de l'équipement serveur 2, en association avec un identifiant de l'utilisateur.

Optionnellement, en 21, le dispositif 100 obtient un historique HST des usages ou consommations de l'utilisateur sur les différents services proposés par l'opérateur. On suppose par exemple que pour ce faire, il requiert l'accès à de telles données auprès d'un autre équipement de service de l'opérateur, qui gère une base de données dédiées au stockage de ces historiques d'usages des utilisateurs. L'historique HST regroupe des informations datées sur les contenus audiovisuels que l'utilisateur a visualisés ou écoutés, au moins partiellement, depuis l'équipement terminal 5 ou un autre terminal configuré pour accéder aux services de l'opérateur, au cours d'une période temporelle passée. Il s'agit notamment d'identifiants de chaînes, d'identifiants de programmes, éventuellement d'un nombre de visualisations ou d'un pourcentage du contenu visualisé, etc.

Dans l'exemple de réalisation de la figure 3, le procédé comprend en 22 la construction d'un modèle d'analyse MA des critères de préférence CP obtenus, par apprentissage ou entraînement d'un module de décision automatique DEC. Optionnellement, l'analyse de son historique de consommation de contenus peut venir compléter et enrichir les critères de préférence CP explicitement fournis par l'utilisateur.

Dans cet exemple de réalisation de l'invention, le module DEC est par exemple intégré au serveur 2 ou à un autre équipement de service, mais, en variante, il peut aussi être situé dans le réseau local LAN 10 et par exemple être intégré dans la passerelle domestique 6.

Une fois construit, un tel modèle d'analyse MA permet au module DEC, dans une phase d'analyse, de sélectionner en 23, parmi une pluralité de contenus audiovisuels disponibles pour cet utilisateur sur un créneau temporel donné, des contenus audiovisuels pour l'utilisateur, qui correspondent à ses critères de préférences.

On note que l'apprentissage du modèle MA et l'analyse des contenus audiovisuels à l'aide du modèle MA sont ici présentés en deux temps, ou en deux phases distinctes, par simplicité. Il est entendu cependant que l'apprentissage peut être effectué plusieurs fois (notamment en parallèle ou après l'analyse) et que l'analyse peut être continue.

Ainsi, dans certains modes de réalisation, l'apprentissage peut comprendre une phase d'apprentissage « en amont » (initiale et préalable à la phase d'analyse) pour apprendre à détecter/reconnaître des caractéristiques ou évènements représentatifs des critères de préférences énoncés par l'utilisateur et définir des paramètres pour permettre ensuite, à partir de n'importe quel contenu audiovisuel reçu, c'est-à-dire présenté en entrée du module DEC, de fournir en sortie une indication de correspondance entre le contenu reçu et l'un au moins des événements traités par l'apprentissage.

La phase d'apprentissage en amont s'appuie sur une base d'apprentissage comprenant des contenus audiovisuels, étiquetés ou non, à l'aide de caractéristiques et/ou d'événements représentatifs des thèmes et préférences énoncés par l'utilisateur et éventuellement d'autres thèmes et préférences non énoncés par l'utilisateur. Ces contenus peuvent être choisis par exemple par l'opérateur, manuellement ou automatiquement.

La phase d'apprentissage peut comprendre aussi un apprentissage au fil de l'eau des habitudes de l'utilisateur à partir de son historique d'usage des contenus audiovisuels programmés par la chaîne personnalisée et plus généralement du service S, afin d'affiner le paramétrage issu de l'apprentissage en amont. Les deux apprentissages peuvent être effectués sur un même dispositif (par exemple sur le serveur 2) ou sur des dispositifs différents (par exemple l'apprentissage amont peut être effectué sur un autre équipement de service, dédié à cette tâche, l'apprentissage au fil de l'eau étant effectué par l'équipement serveur 2 ou localement au niveau de la passerelle domestique 6.

Cette phase d'apprentissage est par exemple une phase d'apprentissage machine ML (ou, en anglais « machine learning »). On entend par apprentissage machine, un apprentissage automatique, ou apprentissage statistique, concerne notamment la conception, l'analyse, le développement et l'implémentation de méthodes permettant à une machine (au sens large) d'évoluer par un processus systématique, et ainsi de remplir des tâches difficiles ou problématiques par des moyens algorithmiques. Un exemple possible d'apprentissage automatique est celui de la classification dont le but est d'étiqueter chaque donnée en l'associant à une classe.

Selon au moins un mode de réalisation, on utilise par exemple un réseau de neurones, par exemple de type réseau profond (ou « deep learning », en anglais). Lors de l'étape d'apprentissage, le réseau RN évolue pour apprendre à reconnaitre un ensemble d'éléments caractéristiques qui permettent de confirmer la présence d'un événement dans un contenu. Par exemple, si on souhaite apprendre à la machine à reconnaître des contenus audiovisuels qui concernent le thème du sport, on lui présente des contenus dans lesquels apparaissent des actions sportives, des retransmissions de matches ou d'épreuves sportives, la présence de public dans des tribunes, d'un panneau de scores, etc, en l'entraînant à retrouver tous les contenus qui en comprennent. Le même procédé peut s'appliquer pour la détection de l'identité d'un acteur ou d'un sportif, de l'identité de l'équipe qui a marqué, la reconnaissance d'un sport particulier, d'un lieu, d'une ville, certaines formes de violence dans les contenus, une chanson, etc.

La phase d'apprentissage fournit en sortie un ensemble de données (logiciel, paramètres, coefficients optimisés du réseau de neurones, etc.), qui constitue le modèle d'analyse MA.

On note que le réseau de neurones peut être remplacé par tout module d'intelligence artificielle apte à remplir les mêmes fonctions (ou des fonctions similaires): apprentissage automatique par arbres de décision, méthodes statistiques, régression logistique, analyse discriminante linéaire, algorithmes génétiques, etc.

Dans la phase d'analyse ou de décision, les contenus audiovisuels programmés dans les grilles de programmes des différentes chaînes de télévision numérique disponibles pour l'utilisateur sur le créneau temporel donné, sont analysés par le module DEC, qui est donc configuré pour prendre une décision pour chaque contenu audiovisuel, par exemple en lui attribuant un indice de compatibilité ICP avec les critères de préférence de l'utilisateur, la valeur de cet indice augmentant avec le niveau de compatibilité analysé.

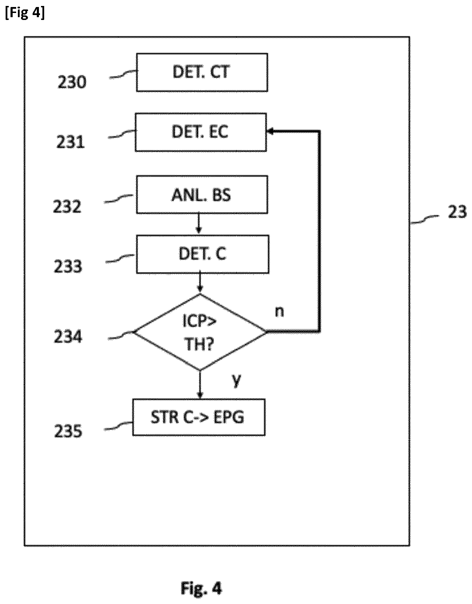

En relation avec la figure 4, on détaille un exemple de réalisation de l'étape de sélection 23.

En 230, un créneau temporel CT est déterminé. Il peut s'agir du créneau temporel courant ou d'un créneau temporel futur, selon que la construction de la chaîne personnalisée se fait sur réception d'une demande d'accès reçue en 25 du terminal utilisateur 5 ou en avance de phase. Dans l'exemple de la figure 3, il s'agit d'un créneau temporel futur.

En 231, un ensemble de contenus audiovisuels de référence EC est choisi. Ce choix dépend bien sûr des droits d'accès de l'utilisateur. On suppose ici qu'il a au moins accès au service de diffusion de chaînes de télévision numérique et que l'ensemble EC comprend les contenus audiovisuels programmés par ces chaînes de télévision numérique sur le créneau temporel déterminé CT ainsi que des métadonnées associées à chacun de ces contenus audiovisuels et comprenant des informations de description de ces contenus.

En 232, le module DEC réalise une analyse des contenus audiovisuels de l'ensemble EC. Une fois analysés, les différents contenus sont par exemple classés selon un ordre d'indice de compatibilité décroissant et le contenu audiovisuel classé en premier est sélectionné en 233 pour être programmé sur le créneau temporel considéré de la grille de programmes de la chaîne personnalisée. Avantageusement, un seuil minimal TH correspondant à une valeur minimale de l'indice de compatibilité est exigé pour la sélection d'un contenu audiovisuel sur le créneau temporel considéré. Ainsi, l'indice de compatibilité ICP associé au contenu classé en premier est comparé en 234 à ce seuil TH. S'il dépasse ce seuil, le contenu est sélectionné, sinon il n'est pas sélectionné.

Lorsque le contenu C est sélectionné, un identifiant du contenu audiovisuel sélectionné et sa chaîne de télévision d'origine sont enregistrés en mémoire en 235, en association avec le créneau temporel considéré.

Si, au contraire, aucun contenu audiovisuel parmi les contenus audiovisuels programmés par les chaînes de télévision numérique disponibles pour l'utilisateur n'a pu être sélectionné, le procédé change d'ensemble de contenus de référence EC en 231et réitère l'étape d'analyse 232 à partir des contenus audiovisuels de ce nouvel ensemble EC. En fonction des droits d'accès de l'utilisateur, il s'agit par exemple des contenus audiovisuels proposés par les services de rattrapage des mêmes chaînes de télévision. Si un contenu audiovisuel disponible en mode rattrapage satisfait les conditions de compatibilité, il est sélectionné en 233, 234, ses informations d'identification sont stockées en 235 dans la grille de programmes EPG de la chaîne personnalisée pour le créneau temporel CT.

Sinon, un autre ensemble de contenus de référence EC est choisi. Il s'agit par exemple du catalogue de contenus audiovisuels disponibles à la demande. Les étapes 231 à 235 sont répétées jusqu'à ce que tous les ensembles de contenus possibles aient été testés ou qu'un contenu satisfaisant les critères de conformité ait été trouvé.

Ensuite, un autre créneau temporel CT est déterminé en 230 et les étapes 231 à 235 sont répétées, jusqu'à ce que tous les créneaux temporels de la grille de programmes soient pourvus.

On suppose donc que l'étape de sélection est répétée pour plusieurs créneaux temporels d'une grille de programmes, par exemple pour les créneaux temporels d'une journée, d'une semaine ou encore d'une quinzaine à venir, en fonction de la disponibilité des grilles de programmes des chaînes de télévision diffusées par le service S.

On note que si pour un ou plusieurs créneaux temporels, aucun contenu audiovisuel ne remplit les conditions de compatibilité, l'invention peut proposer à l'utilisateur d'élargir ses critères de préférences, de sorte à permettre une sélection plus large des contenus.

A l'issue de ces sélections, une grille de programmes EPG de la chaîne de télévision personnalisée de l'utilisateur est construite à partir des informations stockées en mémoire pour chacun des contenus audiovisuels sélectionnés sur les créneaux temporels considérés et elle est mise à disposition de l'utilisateur.

Par exemple, la grille de programmes est transmise en 24 au terminal 5 qui la reçoit en 32 et la stocke en mémoire. Avantageusement, le terminal 5 la restitue à l'utilisateur, lorsque ce dernier demande des informations sur la programmation de sa chaîne personnalisée. Par exemple, il effectue cette demande simplement en cliquant sur une icône dédiée à cette chaîne sur la mosaïque de chaînes de télévision affichée sur l'écran d'accueil du service de diffusion de chaînes de télévision de l'opérateur ou en pressant la touche dédiée de sa télécommande.

De la sorte l'utilisateur peut prendre connaissance de la programmation de sa chaîne personnalisée et notamment du contenu audiovisuel programmé dans le créneau temporel courant CT.

On suppose qu'il demande l'accès DA(C) au contenu audiovisuel C programmé sur le créneau CT courant. Sa demande d'accès DA(C) est transmise par le terminal 5 de l'utilisateur en 34 et reçue en 25. Elle comprend par exemple l'identifiant du contenu audiovisuel choisi et le cas échéant l'identifiant de la chaîne de télévision qui l'a programmé sur le créneau temporel courant. Autrement dit, le terminal 5 fait une requête classique d'accès au contenu audiovisuel C à l'équipement serveur 2, sur le canal de diffusion ou à l'adresse du serveur qui met à disposition le contenu C, identique à celle qu'il ferait si l'utilisateur avait demandé à accéder à la chaîne d'origine ou avait directement choisi le contenu C en rattrapage. A réception des flux de données correspondant au contenu audiovisuel C requis pour la chaîne d'origine du contenu C, il les décode de façon classique, et les restitue en 35 à l'utilisateur comme un programme de sa chaîne personnalisée.

Une fois la restitution terminée, le terminal 5 demande en 36 à l'utilisateur d'évaluer le contenu audiovisuel qu'il vient de visualiser, en particulier son adéquation aux critères de préférences CP qu'il a fixés pour sa chaîne de télévision personnalisée. Pour ce faire, il renseigne une information de conformité à ces critères de préférence CP, par exemple sous la forme d'une note entre 1 et 5.

Le terminal 5 transmet l'information de conformité IC obtenue à l'équipement de service 2 qui la reçoit en 27 et la stocke en mémoire, par exemple dans la mémoire M'.

Avantageusement, l'équipement de service 2 déclenche une mise à jour 28 de l'apprentissage du modèle d'analyse MA des contenus audiovisuels sur la base d'un historique des contenus audiovisuels présentés à l'utilisateur sur sa chaîne personnalisée et des informations de conformité CNF qu'il a fournies en retour. De la sorte, le modèle d'analyse MA évolue au cours du temps en prenant en compte un historique des contenus audiovisuels programmés dans la chaîne de télévision personnalisée et effectivement visualisés par l'utilisateur.

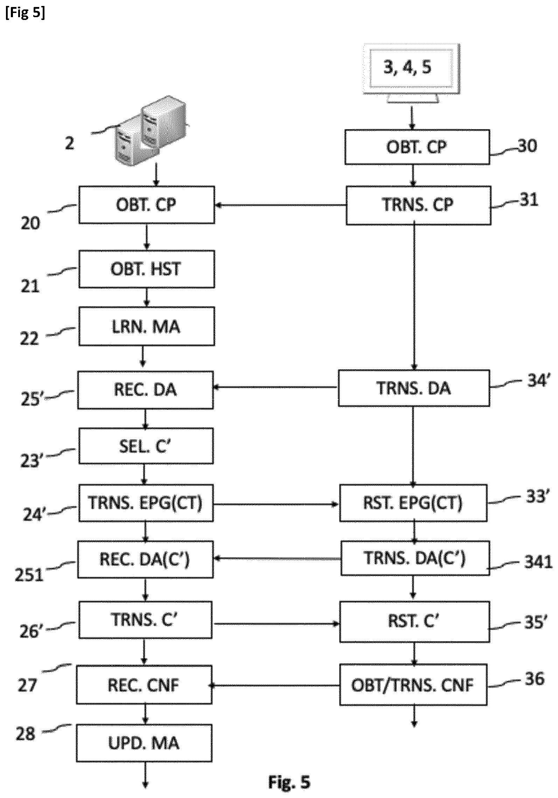

En relation avec la figure 5, on détaille maintenant un mode de réalisation de l'invention selon lequel le contenu audiovisuel programmé sur le créneau temporel courant CT par la chaîne personnalisée est sélectionné à la volée. Autrement dit, le programme de la chaîne personnalisée pour l'utilisateur est construit sur requête.

On note que les étapes 20-22 et 30-31 sont inchangées et qu'elles ne seront pas décrites plus avant. En 34', le terminal 5 transmet à l'équipement serveur 2 une commande d'accès à la chaîne personnalisée sur le créneau temporel courant. Elle est reçue en 25' et déclenche la sélection 23' d'un contenu audiovisuel parmi les contenus audiovisuels disponibles pour l'utilisateur. Excepté le fait que cette étape est mise en œuvre en temps réel et pour le créneau temporel CT courant seulement, elle est identique à l'étape 23 précédemment décrite et ne sera pas détaillée plus avant. On suppose qu'un contenu audiovisuel C' a été sélectionné. Les informations EPG(CT) relatives à ce contenu audiovisuel programmé sur la chaîne personnalisée de l'utilisateur, par exemple son identifiant et, le cas échéant, l'identifiant de la chaîne de télévision d'origine ou du service qui le met à disposition (rattrapage ou vidéo à la demande par exemple) sont transmises en 24' au terminal 5 qui les reçoit en 33'. Plus généralement, ces informations comprennent toutes les informations nécessaires pour que le terminal 5 puisse requérir l'accès au contenu C'.

Par exemple, le terminal 5 les restitue à l'utilisateur afin qu'il décide s'il veut ou non visualiser le contenu C' programmé.

On suppose que l'utilisateur confirme son choix de visualiser ce contenu C'.

A l'aide de ces informations, le terminal 5 requiert en 341 l'accès au contenu C', de façon classique, auprès du service qui le proposait initialement. A réception de cette réquête en 251, l'équipement serveur 2 transmet le contenu C' au terminal en 26', puis le terminal 5 le restitue à l'utilisateur en 35' comme s'il s'agissait d'un programme de sa chaîne personnalisée.

Les étapes 36, 27, 28 de collecte d'une évaluation de l'utilisateur suite à la visualisation du contenu C', de réception par l'équipement serveur 2 et de prise en compte pour la mise à jour du module d'analyse, sont inchangées.

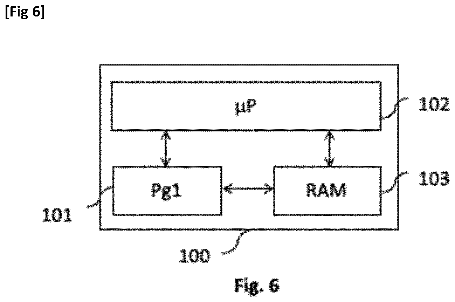

On présente maintenant, en relation avec la figure 6, un exemple de structure matérielle d'un dispositif 100 de génération d'une chaîne de télévision personnalisée pour un utilisateur d'un service d'accès à des contenus multimédia, comprenant un module de d'obtention de critères de préférences de l'utilisateur, un module de sélection, pour au moins un créneau temporel donné, , à partir des critères de préférence et de l'historique d'usage obtenus, d'un contenu audiovisuel parmi une pluralité de contenus audiovisuels disponibles pour cet utilisateur sur ledit créneau temporel, un module de réception d'une demande d'accès à la chaîne personnalisée en provenance de l'utilisateur sur le créneau temporel donné et un module de mise à disposition du contenu audiovisuel sélectionné sur ladite chaîne de télévision personnalisée.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif 100 comprend une mémoire vive 103 (par exemple une mémoire RAM), une unité de traitement 102 équipée par exemple d'un processeur, et pilotée par un programme d'ordinateur Pg1, représentatif des modules d'obtention, de sélection, de réception et de mise à disposition, stocké dans une mémoire morte 101 (par exemple une mémoire ROM ou un disque dur). A l'initialisation, les instructions de code du programme d'ordinateur sont par exemple chargées dans la mémoire vive 103 avant d'être exécutées par le processeur de l'unité de traitement 102. La mémoire vive 103 peut aussi contenir les critères de préférences de l'utilisateur et une grille de programmes de la chaîne de télévision personnalisée.

La figure 6 illustre seulement une manière particulière, parmi plusieurs possibles, de réaliser le dispositif 100 afin qu'il effectue les étapes du procédé de génération d'une chaîne de télévision personnalisée pour l'utilisateur tel que détaillé ci-dessus, en relation avec les figures 3 à 5, dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 100 est réalisé avec une machine de calcul reprogrammable, le programme correspondant (c'est-à-dire la séquence d'instructions) pourra être stocké dans un médium de stockage amovible (tel que par exemple une carte SD, une clé USB, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 100 intégré dans un équipement serveur 2 d'un réseau de télécommunications WAN 1 d'un opérateur, mais il peut aussi être intégré dans une passerelle domestique ou professionnelle 6 d'accès à ce réseau WAN 1 et configurée pour gérer un réseau local LAN 10 auquel se connecte le ou les équipements terminaux 3, 4, 5 de l'utilisateur.

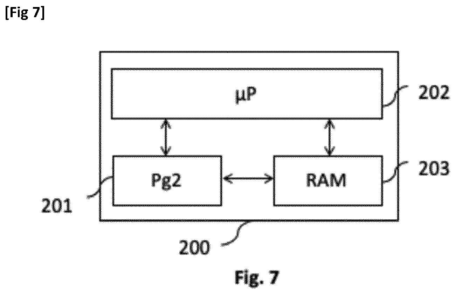

On présente aussi, en relation avec la figure 7, un exemple de structure matérielle d'un dispositif 200 de traitement d'une demande d'accès à une chaîne de télévision personnalisée pour un utilisateur d'un service d'accès à des contenus audiovisuels comprenant un module de transmission à un équipement de service impliqué dans la mise en œuvre du service de critères de préférence de l'utilisateur, ledit équipement de service étant configuré pour générer une chaîne de programmes audiovisuels personnalisée pour l'utilisateur à partir desdits critères de préférence et dudit historique d'usage, un module de transmission à l'équipement de service d'une demande d'accès à la chaîne de télévision personnalisée sur un créneau temporel donné en provenance de l'utilisateur et un module de restitution à l'utilisateur du contenu audiovisuel programmé sur le créneau temporel donné par la chaîne de télévision personnalisée.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif 200 comprend une mémoire vive 203 (par exemple une mémoire RAM), une unité de traitement 202 équipée par exemple d'un processeur, et pilotée par un programme d'ordinateur Pg2, représentatif des modules d'obtention et de transmission, stocké dans une mémoire morte 201 (par exemple une mémoire ROM ou un disque dur). A l'initialisation, les instructions de code du programme d'ordinateur sont par exemple chargées dans la mémoire vive 203 avant d'être exécutées par le processeur de l'unité de traitement 202. La mémoire vive 203 peut aussi contenir les critères de préférences obtenus de l'utilisateur et une grille de programmes de la chaîne de télévision personnalisée.

La figure 7 illustre seulement une manière particulière, parmi plusieurs possibles, de réaliser le dispositif 200 afin qu'il effectue les étapes du procédé de traitement tel que détaillé ci-dessus, en relation avec les figures 3, 4 et 5, et dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 200 est réalisé avec une machine de calcul reprogrammable, le programme correspondant (c'est-à-dire la séquence d'instructions) pourra être stocké dans un médium de stockage amovible (tel que par exemple une carte SD, une clé USB, un CD-ROM ou un DVD-ROM) ou non, ce médium de stockage étant lisible partiellement ou totalement par un ordinateur ou un processeur.

L'invention qui vient d'être décrite dans ses différents modes de réalisation présente de nombreux avantages. En sélectionnant pour un utilisateur le meilleur contenu audiovisuel parmi une pluralité de contenus audiovisuels disponibles sur un ou plusieurs créneaux temporels donnés, elle génère pour cet utilisateur une chaîne de télévision virtuelle et personnalisée, sur la base de ses préférences et éventuellement de ses précédents usages. L'utilisateur n'a plus qu'à se positionner sur sa chaîne de télévision personnalisée pour accéder directement à des contenus audiovisuels choisis pour lui, sans effort ni recherche fastidieuse. Grâce au retour d'expérience proposé à l'utilisateur, la programmation de sa chaîne personnalisée évolue au cours du temps pour mieux s'adapter à ses envies et ses attentes.

Avec l'invention, l'utilisateur peut ainsi définir ses propres chaînes thématiques et même une chaîne familiale dont la programmation s'adapterait aux usages du foyer et prendrait en compte des règles de protection des mineurs. Par exemple, les programmes diffusés à partir de 16H seraient des dessins animés ou autres contenus adaptés au jeune public et ceux du soir des films, séries ou reportages plébiscités par toute la famille.

## Revendications

1. Procédé de génération d'une chaîne de télévision personnalisée pour un utilisateur d'un terminal configuré pour accéder à au moins un service de diffusion de contenus audiovisuels, ledit procédé comprenant :
- l'obtention préalable (20) de critères de préférences de l'utilisateur ;
- pour au moins un créneau temporel donné, la sélection (23, 23'), à partir des critères de préférence obtenus, d'un contenu audiovisuel à programmer sur la chaîne de télévision personnalisée, parmi une pluralité de contenus audiovisuels accessibles depuis le terminal de l'utilisateur par ledit au moins un service, ladite sélection étant mise en œuvre par un module de décision configuré pour détecter dans une image, un texte ou une donnée sonore dudit contenu audiovisuel, à partir d'un modèle d'analyse préalablement construit par apprentissage machine (22), des caractéristiques ou événements représentatifs des critères de préférences de l'utilisateur;
- la programmation du contenu sélectionné dans la chaîne de télévision personnalisée, sur ledit créneau temporel;
- la transmission (26) au terminal de l'utilisateur d'informations d'accès au contenu audiovisuel sélectionné, en vue de sa restitution par le terminal de l'utilisateur comme un programme de la chaîne personnalisée.

2. Procédé de génération selon la revendication précédente, **caractérisé en ce que** l'information d'accès au contenu audiovisuel sélectionné sur le créneau temporel donné comprend au moins un identifiant du contenu audiovisuel sélectionné et un identifiant du service sur lequel ledit contenu audiovisuel est accessible.

3. Procédé de génération selon l'une quelconque des revendications précédentes, **caractérisé en ce que** ladite sélection (23) est mise en œuvre pour une pluralité de créneaux temporels au cours d'une phase préalable à une réception (25) d'une demande d'accès, et **en ce que** le procédé comprend l'enregistrement (235) des informations de programmation des contenus sélectionnés sur la pluralité de créneaux temporels dans une grille de programmes audiovisuels dédiée à la chaîne personnalisée et la transmission (24) de la grille de programmes au terminal de l'utilisateur.

4. Procédé de génération selon l'une quelconque des revendications 1 à 2, **caractérisé en ce que** la sélection (23') du contenu audiovisuel est mise en œuvre sur réception (25') d'une demande d'accès à la chaîne personnalisée sur un créneau temporel courant.

5. Procédé de génération selon l'une des revendications précédentes, **caractérisé en ce que** la pluralité de contenus audiovisuels disponibles pour l'utilisateur appartient à un groupe comprenant au moins :
- des contenus audiovisuels dont la diffusion est programmée dans au moins une grille de télévision accessible à l'utilisateur;
- des contenus audiovisuels déjà diffusés par une chaîne de télévision accessible à l'utilisateur mais encore disponibles en rediffusion;
- des contenus audiovisuels accessibles à l'utilisateur à la demande.

6. Procédé de génération selon l'une quelconque des revendications 1 à 5, **caractérisé en ce qu'**il comprend pour au moins un contenu audiovisuel transmis sur la chaîne de télévision personnalisée de l'utilisateur, l'obtention (27) d'une information de conformité du contenu audiovisuel aux critères de préférence de l'utilisateur et une mise à jour (28) du modèle d'analyse à partir de ladite au moins une information de conformité obtenue pour le contenu audiovisuel transmis.

7. Dispositif (100) de génération d'une chaîne de télévision personnalisée pour un utilisateur d'un terminal configuré pour accéder à au moins un service de diffusion de contenus audiovisuels, ledit dispositif étant configuré pour mettre en œuvre :
- l'obtention préalable de critères de préférences de l'utilisateur ;
- pour au moins un créneau temporel donné, la sélection, à partir des critères de préférence obtenus, d'un contenu audiovisuel à programmer sur la chaîne de télévision personnalisée, parmi une pluralité de contenus audiovisuels accessibles pour cet utilisateur par ledit au moins service sur le créneau temporel donné, ladite sélection étant mise en œuvre par un module de décision configuré pour détecter dans une image, un texte ou une donnée sonore dudit contenu audiovisuel, à partir d'un modèle d'analyse préalablement construit par apprentissage machine (22), des caractéristiques ou événements représentatifs des critères de préférences de l'utilisateur;
- programmation du contenu sélectionné dans la chaîne de télévision personnalisée, sur ledit créneau temporel;
- transmission au terminal de l'utilisateur d'informations d'accès au contenu audiovisuel sélectionné en vue de sa restitution sur le terminal de l'utilisateur comme un programme de la chaîne personnalisée.

8. Equipement de service (2) impliqué dans la mise en œuvre d'au moins un service de diffusion de contenus audiovisuels à un utilisateur, ledit équipement de service comprenant un dispositif (100) de génération d'une chaîne de télévision personnalisée pour ledit utilisateur selon la revendication 7.

9. Système (SD) de diffusion d'une chaîne de télévision personnalisée à un terminal d'un utilisateur dans un réseau de télécommunications, ledit terminal étant configuré pour accéder à au moins un service de diffusion de contenus audiovisuels, ledit système comprenant au moins un dispositif de génération d'une chaîne de télévision personnalisée selon la revendication 7.

10. Programme d'ordinateur comprenant des instructions de code de programme pour la mise en œuvre d'un procédé selon l'une quelconque des revendications 1 à 6, lorsqu'il est exécuté par un processeur.
